# FASCICULE DE BREVET EUROPEEN

(11) **EP 2 761 996 B1**
(45) Date de publication et mention de la délivrance du brevet: **30.12.2015**
(21) Numéro de dépôt: 14153882.7
(22) Date de dépôt: 04.02.2014
(51) Int. Cl.: A01G 5/02

(54) **Procédé de réalisation d'une composition florale**
Herstellungsverfahren für einen Blumenstrauss
Method for making a floral composition

(30) Priorité: 05.02.2013 FR 1350990
(43) Date de publication de la demande: 06.08.2014
(73) Titulaire: Chereau, Bruno, 52160 Germaines (FR)
(72) Inventeur: Chereau, Bruno, 52160 Germaines (FR)
(74) Mandataire: Oudin, Stéphane

(56) Documents cités:
- WO-A1-01/80693
- WO-A1-98/01019
- GB-A- 2 147 205
- US-A1- 2002 092 269

## Description

### Domaine technique

La présente invention concerne un procédé de réalisation d'une composition florale et plus particulièrement d'un bouquet comportant des végétaux et/ou des éléments de décoration.

### Technique antérieure

Il est connu depuis de nombreuses années que, pour constituer un bouquet floral, on juxtapose traditionnellement et manuellement des végétaux ou éléments de décoration par rotation du centre de la composition florale vers l'extérieur de celle-ci. Compte tenu du processus de mise en oeuvre évoqué ci-avant, le bouquet traditionnel est communément de forme circulaire.

Pour ce type de bouquet traditionnel, le volume de végétaux doit être en rapport avec le volume final du bouquet désiré. De plus, la réalisation d'un tel bouquet floral réclame une préparation et une anticipation considérable sur les possibilités des moyens et végétaux nécessaires à son exécution. En effet, les végétaux ou éléments de décoration utilisés doivent, de préférence, avoir des longueurs avoisinantes ou à défaut être tuteurés.

L'exécution parfaite d'une composition florale traditionnelle nécessite également une dextérité et un savoir faire qui font défaut à un exécutant non expérimenté. En effet, dès le début de la réalisation, l'exécutant doit gérer chronologiquement et conjointement les notions d'assemblage artistique et les notions de juxtaposition technique, de volume et de forme définitive à atteindre.

Le principe de réalisation d'un bouquet traditionnel ne permet pas par nature une reproductibilité aisée et une production semi-industrielle manuelle et/ou mécanique de tels bouquets est donc peu envisageable, surtout sans l'emploi d'une main d'oeuvre qualifiée.

Enfin, une fois réalisé, le bouquet traditionnel est fragile et a un volume assez conséquent. Son conditionnement et son transport sont donc particulièrement compliqués et coûteux.

### Exposé de l'invention

La présente invention a donc pour but principal de pallier les inconvénients de l'art antérieur rappelés ci-dessus. Plus précisément, l'invention a pour objectif de proposer un procédé de réalisation d'une composition florale et plus particulièrement d'un bouquet permettant une industrialisation, une mécanisation, une reproductibilité, un conditionnement, un stockage et un transport aisés.

Conformément à l'invention, il est donc proposé un procédé de réalisation d'une composition florale et plus particulièrement d'un bouquet comportant des végétaux et/ou des éléments de décoration, utilisant au moins un support, appelé noyau externe, formé d'une paroi latérale déterminant la forme et le volume dudit noyau externe et apte à recevoir au moins une partie supérieure, ledit procédé étant remarquable en ce qu'il comprend les étapes suivantes :
- réalisation d'une découpe du développé à plat de la paroi latérale du noyau externe ;
- mise en place d'un moyen de fixation le long de la périphérie externe de la découpe ;
- solidarisation sur le moyen de fixation d'une première couche de végétaux et/ou d'éléments de décoration que l'on vient disposer au mieux en forme de vrille, les têtes des végétaux et/ou des éléments de décoration étant maintenues de préférence à une même distance L de la périphérie externe de la découpe ;

- découpe, à l'aide d'un gabarit apposé sur l'ensemble "découpe et végétaux et/ou des éléments de décoration", de la base des tiges des végétaux et/ou des éléments de décoration ;
- mise en volume et assemblage de l'ensemble "découpe et végétaux et/ou des éléments de décoration" de manière à former l'enveloppe externe du bouquet ;
- solidarisation de la partie supérieure au moins à l'intérieur de la paroi latérale et au sommet du noyau externe ;
- décoration de ladite partie supérieure de toutes manières adéquates afin de former le coeur du bouquet.

De préférence, préalablement à l'étape de découpe des tiges, le procédé comprend une étape de réalisation d'un gabarit correspondant à la découpe du développé à plat de la forme extérieure du bouquet que l'on souhaite obtenir au final.

De manière avantageuse, après l'étape de solidarisation sur le moyen de fixation de la première couche de végétaux et/ou d'éléments de décoration, le procédé comporte successivement une étape de mise en place d'un moyen de fixation le long de la périphérie externe de la première couche et une étape de solidarisation sur le moyen de fixation d'une deuxième couche de végétaux et/ou d'éléments de décoration que l'on vient disposer au mieux en forme de vrille.

De même, de manière encore plus avantageuse, après l'étape de solidarisation de la deuxième couche de végétaux et/ou d'éléments de décoration, le procédé comporte une ou plusieurs étape(s) analogue(s) de solidarisation sur la dernière couche solidarisée sur la découpe d'une autre couche de végétaux et/ou d'éléments de décoration.

Après l'étape de mise en volume et d'assemblage de l'ensemble "découpe et végétaux et/ou des éléments de décoration", le procédé comporte avantageusement une étape de ligature des tiges vers la base dudit noyau externe en leur point de convergence avec de la ficelle ou équivalent.

L'étape de solidarisation sur le moyen de fixation d'une première couche de végétaux et/ou d'éléments de décoration est de préférence réalisée à l'aide de lignes de repérage de l'inclinaison des tiges tracées sur la découpe.

Selon une variante de réalisation préférée, avant l'étape de solidarisation de la partie supérieure au moins à l'intérieur de la paroi latérale et au sommet du noyau externe, le procédé comprend les étapes suivantes :
- réalisation d'une découpe du développé à plat d'un noyau interne ;
- mise en place d'un moyen de fixation le long de la périphérie externe de ladite découpe ;
- solidarisation sur la découpe grâce au moyen de fixation d'une première couche de végétaux et/ou d'éléments de décoration que l'on vient disposer au mieux en forme de vrille, les têtes des végétaux et/ou des éléments de décoration étant maintenues de préférence à une même distance de la périphérie externe de la découpe ;
- mise en volume et assemblage de l'ensemble "découpe et végétaux et/ou des éléments de décoration" de manière à former le noyau interne et à avoir ladite première couche à l'intérieur dudit noyau interne.

De manière avantageuse, après l'étape de solidarisation sur le moyen de fixation de la première couche de végétaux et/ou d'éléments de décoration, il comporte successivement une étape de mise en place d'un moyen de fixation le long de la périphérie externe de la première couche et une étape de solidarisation sur le moyen de fixation d'une deuxième couche de végétaux et/ou d'éléments de décoration que l'on vient disposer au mieux en forme de vrille.

De même, de manière encore plus avantageuse, après l'étape de solidarisation de la deuxième couche de végétaux et/ou d'éléments de décoration, le procédé comporte une ou plusieurs étape(s) analogue(s) de solidarisation sur la dernière couche solidarisée sur la découpe du noyau interne d'une autre couche de végétaux et/ou d'éléments de décoration.

L'étape de solidarisation sur le moyen de fixation d'une première couche de végétaux et/ou d'éléments de décoration est de préférence réalisée à l'aide de lignes de repérage de l'inclinaison des tiges tracées sur la découpe du noyau interne.

### Description sommaire des figures

D'autres caractéristiques et avantages de la présente invention ressortiront de la description qui va suivre, en référence aux dessins annexés qui en illustrent des exemples de réalisation dépourvus de tout caractère limitatif, sur lesquels :
- la figure 1 est une vue en perspective d'un bouquet obtenu avec le procédé selon l'invention ;
- la figure 2 est une vue en perspective d'un noyau du bouquet de la figure 1 mis en volume ;
- les figures 3 à 10 représentant de manière schématique les étapes principales du procédé de l'invention ;
- la figure 11 est une vue en perspective d'un bouquet obtenu avec une variante du procédé selon l'invention.

### Meilleure manière de réaliser l'invention technique

Une composition florale, et plus particulièrement un bouquet 1, est généralement constitué de végétaux décoratifs 2 et/ou d'éléments de décoration, tels que tissu avec baleine par exemple, venant avantageusement se mêler auxdits végétaux 2. Ces derniers comportent normalement une tête décorative 3 par exemple des épis, des feuilles ou des fleurs, montés sur des tiges 4 dont la longueur peut nettement varier suivant le type des végétaux utilisés.

Conformément à l'invention et à partir de tels végétaux 2 complétés avantageusement par des éléments de décoration montés généralement sur des supports, semblables auxdites tiges 4, il va être décrit ci-après la succession des étapes caractérisant le procédé de réalisation d'une composition florale en utilisant pour cela au moins un noyau 5 dit externe dont la forme et les caractéristiques générales seront détaillées plus loin.

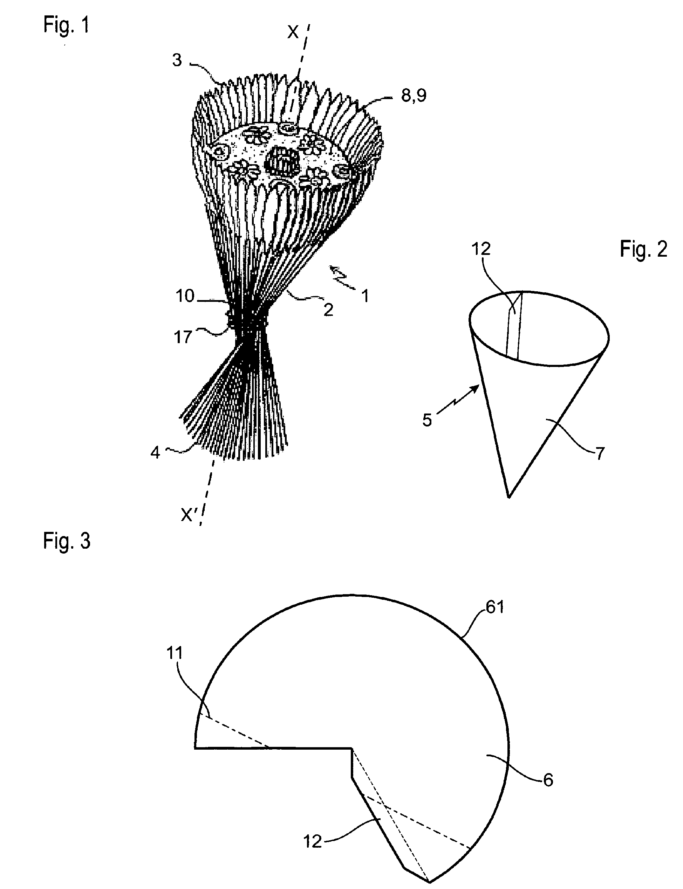

Conformément aux figures 1 à 10, ce procédé de réalisation d'une composition florale et plus particulièrement d'un bouquet 1 met en oeuvre les étapes principales suivantes.

Tout d'abord, en référence à la figure 3, on réalise la découpe 6 du développé à plat du noyau externe 5 dans un matériau suffisamment souple pour être mis en volume par pliage par exemple et suffisamment rigide pour garder sa forme lorsque qu'il est mis en volume. Ladite découpe 6 est avantageusement réalisée dans des matériaux tels que, par exemple, carton, grillage, plastique, matériau composite ou leurs dérivés. Une fois mise en volume, la découpe 6 sera assemblée pour former la paroi latérale 7 dudit noyau externe 5, ce dernier étant de préférence un cône de révolution autour d'un axe X-X' (Cf. figures 1 et 2).

Toutefois, le noyau externe 5 pourra avoir une toute autre forme, sans sortir du cadre de la présente invention. Ainsi, il pourra, par exemple, être de forme prismatique de révolution, tronconique, hémisphérique ou encore en forme de joint torique.

Quelque soit sa forme, le noyau externe 5 est tel que, d'une part, il est apte à recevoir au moins une partie supérieure 8 apte à maintenir en position les végétaux 2 dont la longueur de tige 4 est quelconque ou encore des supports d'éléments de décoration de sorte à former le coeur 9 du bouquet 1 et, d'autre part, sa paroi latérale 7 détermine de préférence un point de convergence ou un sommet 10 avantageusement utilisé pour faire une ligature des tiges 4 des végétaux 2.

Par ailleurs, la découpe 6 comporte des lignes de repérage 11 de l'inclinaison des tiges 4 des végétaux 2 afin d'obtenir une vrille lors de la mise en place desdites tiges 4 sur la découpe 6. De même, la découpe 6 pourra également comporter au moins une languette 12 pour faciliter son assemblage après sa mise en volume.

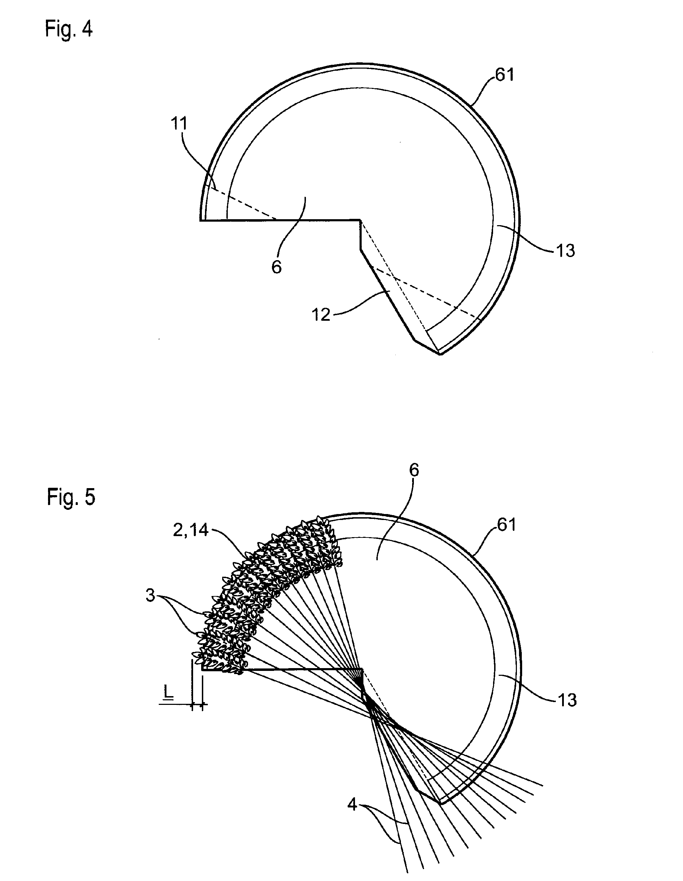

L'étape suivante consiste à fixer un moyen de fixation 13 le long de la périphérie externe 61 de la découpe 6, ledit moyen de fixation 13 étant avantageusement un ruban adhésif double face collé le long de ladite périphérie externe 61 (Cf. figure 4).

Pour réaliser le moyen de fixation 13, il va de soi que l'on peut envisager des moyens autres que le ruban adhésif double face collé, tels que, par exemple, l'agrafage, la couture par fil rigide ou élastique sur ruban simple, élastique ou ruban crochet.

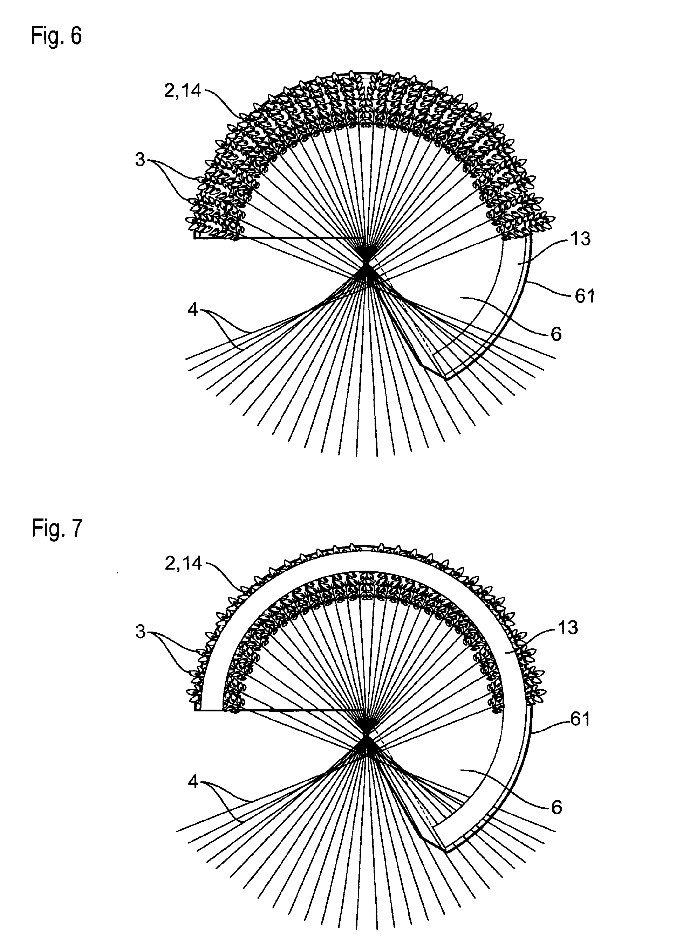

Ensuite, conformément aux figures 5 et 6, on solidarise sur la découpe 6 grâce au moyen de fixation 13 une première couche 14 de végétaux 2 et/ou d'éléments de décoration que l'on vient disposer au mieux en forme de vrille en s'aidant des lignes de repérage 11 représentées sur la découpe 6.

Toutefois, le moyen de fixation 13 pourra être intégré à la découpe 6 qui sera alors, par exemple, réalisée dans un matériau comportant une face au moins en partie adhésive sans sortir du cadre de la présente invention. Ladite face sera alors avantageusement recouverte d'un film qu'il conviendra de retirer avant de mettre en place la première couche 14 de végétaux 2 et/ou d'éléments de décoration.

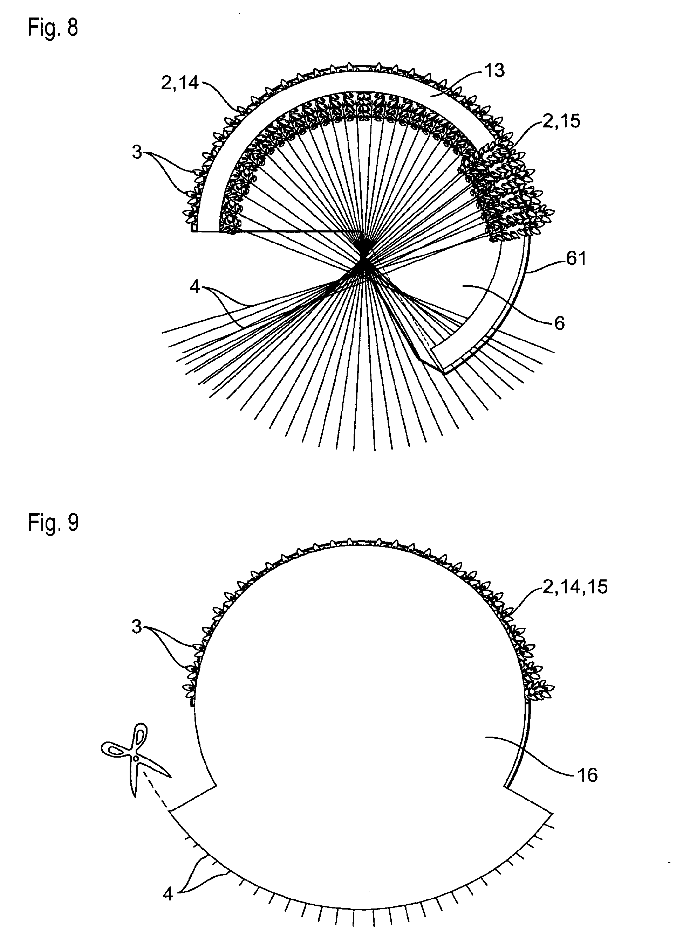

Selon une variante particulièrement avantageuse, en référence aux figures 7 et 8, bien que cette étape ne soit pas toujours nécessaire, on vient fixer par-dessus la première couche 14 et en utilisant les mêmes moyens notamment de fixation 13 que précédemment, une deuxième couche 15 de végétaux 2 et/ou d'éléments de décoration avantageusement différents des végétaux de la première couche 14 ainsi que le cas échéant d'autres éléments de décoration. Les végétaux 2 et les éléments de décoration sont alors disposés comme dans l'étape précédente au mieux en forme de vrille, mais selon une direction avantageusement oblique par rapport à celle des végétaux 2 de la première couche 14 comme représenté partiellement sur la figure 8.

Il va de soi que l'on pourra, sans sortir du cadre de la présente invention, procéder successivement de manière analogue pour fixer sur la dernière couche solidarisée sur la découpe 6 une autre couche de végétaux 2 et/ou d'éléments de décoration afin d'obtenir une découpe 6 recouverte d'une multitude de couches successives de de végétaux 2 et/ou d'éléments de décoration.

On prendra soin, bien entendu, que les têtes 3 des végétaux 2 et/ou des éléments de décoration d'au moins la dernière couche solidarisée sur la découpe 6 soient maintenues de préférence à une même distance L de la périphérie externe 61 de la découpe 6 afin de créer ultérieurement une collerette extérieure harmonieuse du bouquet 1 final (Cf. figure 5).

Ensuite, conformément à la figure 9, on découpe, à l'aide d'un gabarit 16 apposé sur l'ensemble "découpe 6 et végétaux 2 et/ou des éléments de décoration", la base des tiges 4 de ces derniers afin d'obtenir un bouquet 1 final stable une fois la découpe 6 mise en volume pour former le noyau externe 5. En effet, les tiges 4 des végétaux 2 et/ou des éléments de décoration, qui ne sont évidemment pas de la même longueur, ne permettent pas d'obtenir une assise stable pour le bouquet 1 lorsque l'ensemble "découpe 6 et végétaux 2 et/ou des éléments de décoration" est mis en volume. Il est donc nécessaire d'ajuster la longueur de chacune des tiges 4. Pour cela, on utilise un gabarit 16 qui correspond à la découpe du développé à plat de la forme extérieure du bouquet 1 que l'on souhaite obtenir au final. Ensuite, il faut appliquer ledit gabarit 16 sur l'ensemble "découpe 6 et végétaux 2 et/ou des éléments de décoration" et découper la partie des tiges 4 dépassant dudit gabarit 16.

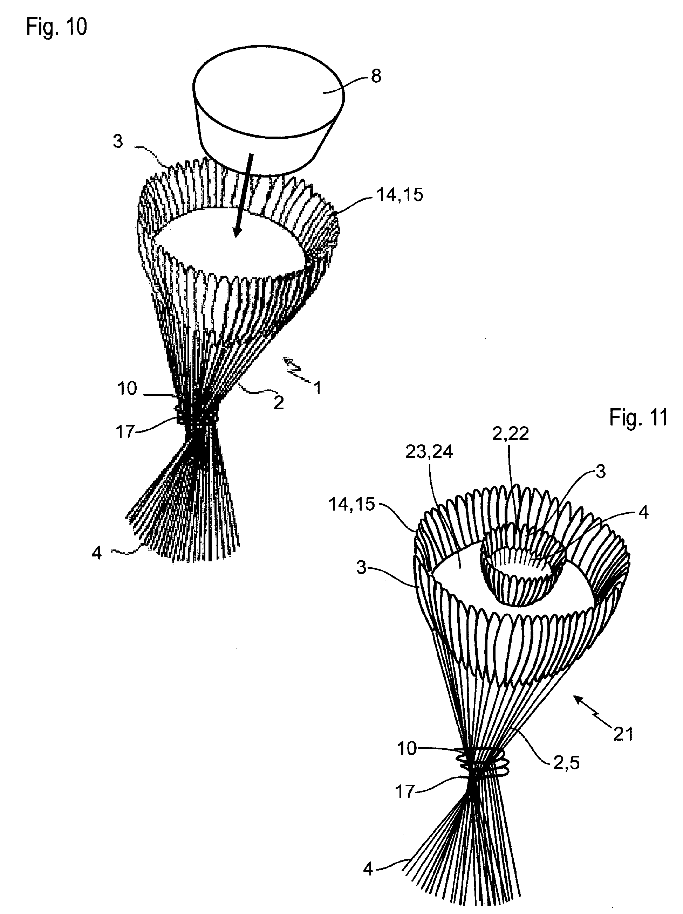

En référence à la figure 10, une fois la longueur des tiges 4 ajustée, on met en volume l'ensemble "découpe 6 et végétaux 2 et/ou des éléments de décoration" de manière à former l'enveloppe externe du bouquet 1 et à avoir la(les) couche(s) 14,15 à l'extérieur dudit noyau externe 5. La découpe 6 est alors assemblée, à l'aide avantageusement de sa languette 12, par tous moyens connus comme par exemple collage, agrafage ou procédé analogue pour former la paroi latérale 7 du noyau externe 5.

Après, lorsque la forme du noyau externe 5 l'autorise, c'est-à-dire lorsque les génératrices de sa paroi latérale 7 présentent un point de convergence 10 vers le bas du noyau externe 5, on ligature alors les tiges 4 vers la base dudit noyau externe 5 en leur point de convergence 10 avec de la ficelle 17 ou équivalent.

A ce stade, il ne reste plus qu'à solidariser la partie supérieure 8 à l'intérieur de la paroi latérale 7 au sommet du noyau externe 5 et à décorer ladite partie supérieure 8 de toutes manières adéquates afin de former le coeur 9 du bouquet 1, c'est-à-dire le centre visible dudit bouquet 1.

Pour former ledit coeur 9, on utilisera avantageusement différents végétaux tels que, par exemple, des végétaux multi-fleurs ou dispersés sur une hampe qui ne présentent que des tiges très courtes difficilement utilisables dans la composition florale pour former l'enveloppe externe du bouquet 1.

Ladite partie supérieure 8 associée au noyau externe 5 est normalement constituée d'un matériau souple apte à retentir de l'eau tel que mousse synthétique par exemple ou tout autre produit également connu pour ses qualités mécaniques de maintient des végétaux 2 positionnés par simple piquage. Bien entendu, le matériau souple doit être d'abord compatible avec les végétaux 2 et/ou les éléments de décoration choisis et avec la paroi latérale 7 du noyau externe à laquelle il est au moins solidarisé par tous moyens connus comme par exemple collage, agrafage, soudage ou procédé analogue.

On comprend bien que la partie supérieure 8 peut être de toutes formes telles que, par exemple, bombée ou creusée (convexes ou concaves) pour accroitre les possibilités de décorations et guider l'exécutant dans la mise en place des végétaux 2 ou éléments de décoration sur ladite partie supérieure 8.

On comprend également bien que le procédé de réalisation d'une composition florale et plus particulièrement d'un bouquet 1 selon l'invention est particulièrement intéressant.

En effet, il ouvre des possibilités d'assemblages, de réversibilité au cours de l'exécution et au terme de celle-ci. L'exécutant peut à tout moment modifier les éléments en place sans avoir à effectuer le démantèlement de l'ensemble réalisé jusqu'au niveau à modifier.

Le procédé selon l'invention permet également d'escamoter la notion de chronologie de décoration associée à la réalisation d'un bouquet traditionnel et donc d'industrialiser la fabrication des bouquets par la fabrication de produits semi-finis. En effet, la partie supérieure du bouquet 8 et la structure externe du bouquet 1 sont mécaniquement et chronologiquement indépendantes lors de leurs mises en oeuvre respectives. L'exécutant peut donc dans un premier temps décorer la découpe 6 à plat du noyau externe 5 avant sa mise en volume pour ultérieurement former la paroi latérale 7 dudit noyau externe 5, solidariser et décorer la partie supérieure 8.

De plus, ce procédé permet des conditionnements, des stockages et des transports aisés et peu onéreux car les ensembles "découpe 6 et végétaux 2 et/ou des éléments de décoration" peuvent être stockés horizontalement ou verticalement les uns parallèles aux autres sans risque d'endommagement et sans perte de volume.

En outre, le procédé selon l'invention permet à un exécutant non qualifié dans l'art floral de réaliser aisément une composition florale.

De plus, ledit procédé offre la possibilité, d'une part, d'une mécanisation et/ou d'une automatisation industrielle partielle ou totale de la réalisation d'une composition florale et, d'autre part, de réduire voire de supprimer toute intervention humaine.

Enfin, on comprend bien que le procédé de réalisation selon l'invention est également financièrement intéressant car le noyau 5 et la partie supérieure 8 sont récupérables et recyclables.

### Description d'autres modes de réalisation

Selon une variante, le procédé de réalisation selon l'invention permet de réaliser une composition florale et plus particulièrement d'un bouquet 21 représenté sur la figure 11 et comportant un noyau externe 5, un noyau interne 22 et une partie supérieure 23 de forme globalement annulaire disposée entre lesdits noyaux externe 5 et interne 22. Pour ce faire, avant l'étape de solidarisation de la partie supérieure 23 au sommet du noyau 5, et de préférence après l'étape de mise en volume et d'assemblage de l'ensemble "découpe 6 et végétaux 2 et/ou des éléments de décoration", on réalise le noyau interne 22 sensiblement de la même façon que le noyau externe 5.

Ainsi, on réalise tout d'abord une découpe du développé à plat dudit noyau interne 22 dans un matériau semblable à celui utilisé pour la découpe 6 du noyau externe 5.

Le noyau interne 22 est, une fois en volume, de préférence un tronc de cône de révolution. Toutefois, le noyau interne 22 pourra avoir une toute autre forme, sans sortir du cadre de la présente invention. Ainsi, il pourra, par exemple, être de forme prismatique, hémisphérique ou encore en forme de joint torique.

Par ailleurs, la découpe dudit noyau interne 22 comporte également des lignes de repérage de l'inclinaison des tiges 4 des végétaux 2 afin d'orienter lesdites tiges 4 lors de leur mise en place. De même, ladite découpe pourra également comporter au moins une languette pour faciliter son assemblage après sa mise en volume.

L'étape suivante consiste à fixer un moyen de fixation le long de la périphérie externe de ladite découpe, ledit moyen de fixation étant avantageusement un ruban adhésif double face collé le long de ladite périphérie externe.

Comme décrit précédemment, pour réaliser le moyen de fixation, il va de soi que l'on peut envisager des moyens autres que le ruban adhésif double face collé, tels que, par exemple, l'agrafage, la couture par fil rigide ou élastique sur ruban simple, élastique ou ruban crochet. Ensuite, on solidarise sur la découpe du noyau interne 22 grâce au moyen de fixation une première couche de végétaux 2 et/ou d'éléments de décoration que l'on vient disposer au mieux en forme de vrille en s'aidant des lignes de repérage représentées sur ladite découpe.

Selon une variante particulièrement avantageuse, bien que cette étape ne soit pas toujours nécessaire, on vient fixer par-dessus la première couche en utilisant les mêmes moyens notamment de fixation que précédemment, une deuxième couche en procédant de façon similaire à la fixation de la deuxième couche 15 du noyau externe 5 précédemment décrite.

Il va de soi que l'on pourra également, sans sortir du cadre de la présente invention, procéder successivement de manière analogue pour fixer sur la dernière couche solidarisée sur la découpe du noyau interne 22 une autre couche de végétaux 2 et/ou d'éléments de décoration afin d'obtenir un noyau interne 22 recouvert d'une multitude de couches successives de de végétaux 2 et/ou d'éléments de décoration.

On prendra soin, bien entendu, que les têtes 3 des végétaux 2 et/ou des éléments de décoration d'au moins la dernière couche solidarisée sur la découpe soient maintenues de préférence à une même distance de la périphérie externe de la découpe du noyau interne 22 afin de créer ultérieurement une collerette intérieure harmonieuse du bouquet 21 final (Cf. figure 11).

Ensuite, on met en volume l'ensemble "découpe et végétaux 2 et/ou des éléments de décoration" de manière à former le noyau interne 22 et à avoir la(les) couche(s) à l'intérieur dudit noyau interne 22. La découpe est alors assemblée, à l'aide avantageusement de sa languette, par tous moyens connus comme par exemple collage, agrafage ou procédé analogue pour former le noyau interne 22.

A ce stade, il ne reste plus qu'à disposer la partie supérieure 23 entre les noyaux externe 5 et interne 22, à la solidariser au moins à l'intérieur de la paroi latérale 7 et au sommet du noyau externe 5, et à décorer ladite partie supérieure 23 de sorte à former le coeur 24 du bouquet 1, ledit noyau interne 22 étant disposé à l'intérieur du noyau externe 5. La partie supérieure 23 est alors de forme globalement annulaire et est semblable à la partie supérieure 8 précédemment décrite. La partie supérieure 23 est de préférence solidaire des deux noyaux externe 5 et interne 22.

Préalablement à cette dernière étape, il pourra être nécessaire d'ajuster la longueur des tiges 4 des végétaux 2 dépassant trop du noyau interne 22 afin de permettre sa mise en place à l'intérieur du noyau externe 5.

On comprend tout l'intérêt de cette variante car elle permet d'augmenter le nombre de modèles de bouquets 21 en faisant varier les formes respectives des noyaux externe 5 et interne 22 et la position relative du noyau interne 22 par rapport au noyau externe 5. En effet, on pourra, par exemple, associer un noyau externe 5 conique avec un noyau interne 22 en tronc de pyramide. De même, avec une partie supérieure 23 dont la forme externe est globalement un tronc de cône ou de pyramide, on pourra obtenir un coeur 24 en trois dimensions en positionnant le dessus du noyau interne 22 au dessus du dessus du noyau externe 5.

Dans cette variante de bouquet 21, la partie supérieure du bouquet 8 et les structures externe et interne du bouquet 21 sont également mécaniquement et chronologiquement indépendantes lors de leurs mises en oeuvre respectives.

Enfin, cette variante du procédé selon l'invention permet de réaliser des bouquets 21 de grandes dimensions tout en réduisant significativement leur masse. En effet, la partie supérieure 23, qui est apte à retenir de l'eau pour conserver plus longtemps le coeur 24, est annulaire et donc moins lourde.

### Possibilité d'application industrielle

On comprend bien que le procédé est particulièrement applicable à la réalisation de bouquets industriels, c'est-à-dire répétitif, aussi bien qu'à la réalisation unitaire ou artisanale de compositions florales originales.

Enfin, il va de soi que le procédé conforme à l'invention qui vient d'être décrit n'est qu'une illustration particulière, en aucun cas limitative de l'invention.

## Revendications

1. Procédé de réalisation d'une composition florale et plus particulièrement d'un bouquet (1,21) comportant des végétaux (2) et/ou des éléments de décoration, utilisant au moins un support, appelé noyau externe (5), formé d'une paroi latérale (7) déterminant la forme et le volume dudit noyau externe (5) et apte à recevoir au moins une partie supérieure (8,23), ledit procédé étant **caractérisé en ce qu'**il comprend les étapes suivantes :
- réalisation d'une découpe (6) du développé à plat de la paroi latérale (7) du noyau externe (5) ;
- mise en place d'un moyen de fixation (13) le long de la périphérie externe (61) de la découpe (6) ;
- solidarisation sur le moyen de fixation (13) d'une première couche (14) de végétaux (2) et/ou d'éléments de décoration que l'on vient disposer au mieux en forme de vrille, les têtes (3) des végétaux (2) et/ou des éléments de décoration étant maintenues de préférence à une même distance L de la périphérie externe (61) de la découpe (6) ;
- découpe, à l'aide d'un gabarit (16) apposé sur l'ensemble "découpe (6) et végétaux (2) et/ou des éléments de décoration", de la base des tiges (4) des végétaux (2) et/ou des éléments de décoration ;
- mise en volume et assemblage de l'ensemble "découpe (6) et végétaux (2) et/ou des éléments de décoration" de manière à former l'enveloppe externe du bouquet (1,21) ;
- solidarisation de la partie supérieure (8,23) au moins à l'intérieur de la paroi latérale (7) et au sommet du noyau externe (5) ;
- décoration de ladite partie supérieure (8,23) de toutes manières adéquates afin de former le coeur (9,24) du bouquet (1,21).

2. Procédé selon la revendication 1, **caractérisé en ce qu'**il comprend, préalablement à l'étape de découpe des tiges (4), une étape de réalisation d'un gabarit (16) correspondant à la découpe du développé à plat de la forme extérieure du bouquet (1) que l'on souhaite obtenir au final.

3. Procédé selon l'une quelconque des revendications 1 ou 2, **caractérisé en ce qu'**après l'étape de solidarisation sur le moyen de fixation (13) de la première couche (14) de végétaux (2) et/ou d'éléments de décoration, il comporte successivement une étape de mise en place d'un moyen de fixation (13) le long de la périphérie externe de la première couche (14) et une étape de solidarisation sur le moyen de fixation (13) d'une deuxième couche (15) de végétaux (2) et/ou d'éléments de décoration que l'on vient disposer au mieux en forme de vrille.

4. Procédé selon la revendication 3, **caractérisé en ce qu'**après l'étape de solidarisation de la deuxième couche (15) de végétaux (2) et/ou d'éléments de décoration il comporte une ou plusieurs étape(s) analogue(s) de solidarisation sur la dernière couche solidarisée sur la découpe (6) d'une autre couche de végétaux (2) et/ou d'éléments de décoration.

5. Procédé selon l'une quelconque des revendications 1 à 4, **caractérisé en ce qu'**après l'étape de mise en volume et d'assemblage de l'ensemble "découpe (6) et végétaux (2) et/ou des éléments de décoration", il comporte une étape de ligature des tiges (4) vers la base dudit noyau externe (5) en leur point de convergence (10) avec de la ficelle (17) ou équivalent.

6. Procédé selon l'une quelconque des revendications 1 à 5, **caractérisé en ce que** l'étape de solidarisation sur le moyen de fixation (13) d'une première couche (14) de végétaux (2) et/ou d'éléments de décoration est réalisée à l'aide de lignes de repérage (11) de l'inclinaison des tiges (4) tracées sur la découpe (6).

7. Procédé selon l'une quelconque des revendications 1 à 6, **caractérisé en ce qu'**avant l'étape de solidarisation de la partie supérieure (8,23) au moins à l'intérieur de la paroi latérale (7) et au sommet du noyau externe (5), il comprend les étapes suivantes :
- réalisation d'une découpe du développé à plat d'un noyau interne (22) ;
- mise en place d'un moyen de fixation le long de la périphérie externe de ladite découpe ;
- solidarisation sur la découpe grâce au moyen de fixation d'une première couche de végétaux (2) et/ou d'éléments de décoration que l'on vient disposer au mieux en forme de vrille, les têtes (3) des végétaux (2) et/ou des éléments de décoration étant maintenues de préférence à une même distance de la périphérie externe de la découpe ;
- mise en volume et assemblage de l'ensemble "découpe et végétaux (2) et/ou des éléments de décoration" de manière à former le noyau interne (22) et à avoir ladite première couche à l'intérieur dudit noyau interne (22).

8. Procédé selon la revendication 7, **caractérisé en ce qu'**après l'étape de solidarisation sur le moyen de fixation de la première couche de végétaux (2) et/ou d'éléments de décoration, il comporte successivement une étape de mise en place d'un moyen de fixation le long de la périphérie externe de la première couche et une étape de solidarisation sur le moyen de fixation d'une deuxième couche de végétaux (2) et/ou d'éléments de décoration que l'on vient disposer au mieux en forme de vrille.

9. Procédé selon la revendication 8, **caractérisé en ce qu'**après l'étape de solidarisation de la deuxième couche de végétaux (2) et/ou d'éléments de décoration il comporte une ou plusieurs étape(s) analogue(s) de solidarisation sur la dernière couche solidarisée sur la découpe du noyau interne (22) d'une autre couche de végétaux (2) et/ou d'éléments de décoration.

10. Procédé selon l'une quelconque des revendications 7 à 9, **caractérisé en ce que** l'étape de solidarisation sur le moyen de fixation d'une première couche de végétaux (2) et/ou d'éléments de décoration est réalisée à l'aide de lignes de repérage de l'inclinaison des tiges (4) tracées sur la découpe du noyau interne (22).

## Patentansprüche

1. Verfahren zum Gestalten eines Blumengestecks, und genauer eines Blumenstraußes (1, 21), Pflanzen (2) und/ oder Dekorationselemente umfassend, durch die Verwendung zumindest einer Unterlage, die äußerer Kern (5) genannt wird, und durch eine Seitenwand (7) gebildet wird, die die Form und das Volumen des besagten äußeren Kerns (5) bestimmt und in der Lage ist, zumindest einen oberen Abschnitt (8, 23) aufzunehmen, wobei das besagte Verfahren **dadurch gekennzeichnet ist, dass** es die folgenden Schritte umfasst:
- Ausführen eines Zuschnitts (6) der Flachschablone der Seitenwand (7) des äußeren Kerns (5);
- Anbringen eines Befestigungsmittels (13) entlang des Außenumfangs (61) des Zuschnitts (6);
- Verbinden einer ersten Schicht (14) von Pflanzen (2) und/ oder Dekorationselementen mit dem Befestigungsmittel (13), die man bestenfalls spiralförmig anordnet, wobei die Köpfe (3) der Pflanzen (2) und/ oder der Dekorationselemente vorzugsweise in einem selben Abstand L vom Außenumfang (61) des Zuschnitts (6) festgehalten werden;
- Zuschnitt der Stängelbasis (4) der Pflanzen (2) und/ oder der Dekorationselemente mithilfe einer Schablone (16), die auf die Einheit "Zuschnitt (6) und Pflanzen (2) und/ oder Dekorationselemente" gelegt wird;
- Aufrichten und Zusammensetzen der Einheit "Zuschnitt (6) und Pflanzen (2) und/ oder Dekorationselemente" zum Bilden der äußeren Hülle des Blumenstraußes (1, 21);
- Verbinden des oberen Abschnitts (8, 23) zumindest im Inneren der Seitenwand (7) und an der Spitze des äußeren Kerns (5);
- Dekorieren des besagten oberen Abschnitts (8, 23) auf die jeweils geeignete Art, um das Herzstück (9, 24) des Blumenstraußes (1, 21) zu bilden.

2. Verfahren nach Anspruch 1, **dadurch gekennzeichnet, dass** es vor dem Schritt des Zuschneidens der Stängel (4) einen Schritt zum Erzeugen einer Schablone (16) entsprechend dem Zuschnitt der Flachschablone der Außenform des Blumenstraußes (1) umfasst, die man am Ende erzielen möchte.

3. Verfahren nach irgendeinem der Ansprüche 1 oder 2, **dadurch gekennzeichnet, dass** es nach dem Schritt zum Verbinden einer ersten Schicht (14) von Pflanzen (2) und/ oder Dekorationselementen mit dem Befestigungsmittel (13) nacheinander einen Schritt zum Anbringen eines Befestigungsmittels (13) entlang des Außenumfangs der ersten Schicht (14) und einen Schritt zum Verbinden einer zweiten Schicht (15) von Pflanzen (2) und/ oder Dekorationselementen mit dem Befestigungsmittel (13) umfasst, die man bestenfalls spiralförmig anordnet.

4. Verfahren nach Anspruch 3, **dadurch gekennzeichnet, dass** es nach dem Schritt zum Verbinden der zweiten Schicht (15) von Pflanzen (2) und/ oder Dekorationselementen einen oder mehrere analoge(n) Schritt(e) zum Verbinden einer weiteren Schicht von Pflanzen (2) und/ oder Dekorationselement mit der letzten Schicht umfasst, die auf dem Zuschnitt (6) befestigt wurde.

5. Verfahren nach irgendeinem der Ansprüche 1 bis 4, **dadurch gekennzeichnet, dass** es nach dem Schritt zum Aufrichten und Zusammensetzen der Einheit "Zuschnitt (6) und Pflanzen (2) und/ oder Dekorationselemente" einen Schritt zum Abbinden der Stängel (4) an deren Konvergenzpunkt (10) zur Basis des besagten äußeren Kerns (5) mit einem Faden (17) oder ähnlichem umfasst.

6. Verfahren nach irgendeinem der Ansprüche 1 bis 5, **dadurch gekennzeichnet, dass** der Schritt zum Verbinden einer ersten Schicht (14) von Pflanzen (2) und/ oder Dekorationselementen mit dem Befestigungsmittel (13) mithilfe von Linien zum Markieren (11) der Neigung der Stängel (4) erfolgt, die auf dem Zuschnitt (6) aufgezeichnet sind.

7. Verfahren nach irgendeinem der Ansprüche 1 bis 6, **dadurch gekennzeichnet, dass** es vor dem Schritt zum Verbinden des oberen Abschnitts (8, 23) zumindest im Inneren der Seitenwand (7) und an der Spitze des äußeren Kerns (5) die folgenden Schritte umfasst:
- Ausführen eines Zuschnitts der Flachschablone eines inneren Kerns (22);
- Anbringen eines Befestigungsmittels entlang des Außenumfangs des besagten Zuschnitts;
- Verbinden mit dem Zuschnitt, und anhand des Befestigungsmittels, einer ersten Schicht von Pflanzen (2) und/ oder Dekorationselementen, die man bestenfalls spiralförmig anordnet, wobei die Köpfe (3) der Pflanzen (2) und/ oder der Dekorationselemente vorzugsweise in einem selben Abstand vom Außenumfang des Zuschnitts festgehalten werden;
- Aufrichten und Zusammensetzen der Einheit "Zuschnitt und Pflanzen (2) und/ oder Dekorationselemente" zum Bilden eines inneren Kerns (22), und um die besagte erste Schicht innerhalb des besagten inneren Kerns (22) zu haben.

8. Verfahren nach Anspruch 7, **dadurch gekennzeichnet, dass** es nach dem Schritt zum Verbinden der ersten Schicht von Pflanzen (2) und/ oder Dekorationselementen mit dem Befestigungsmittel nacheinander einen Schritt zum Anbringen eines Befestigungsmittels entlang des Außenumfangs der ersten Schicht und einen Schritt zum Verbinden einer zweiten Schicht von Pflanzen (2) und/ oder Dekorationselementen mit dem Befestigungsmittel, die man bestenfalls spiralförmig anordnet.

9. Verfahren nach Anspruch 8, **dadurch gekennzeichnet, dass** es nach dem Schritt zum Verbinden der zweiten Schicht von Pflanzen (2) und/ oder Dekorationselementen einen oder mehrere analoge(n) Schritt(e) zum Verbinden einer weiteren Schicht von Pflanzen (2) und/ oder Dekorationselement mit der letzten Schicht umfasst, die mit dem Zuschnitt des inneren Kerns (22) verbunden wurde.

10. Verfahren nach irgendeinem der Ansprüche 7 bis 9, **dadurch gekennzeichnet, dass** der Schritt zum Verbinden einer ersten Schicht von Pflanzen (2) und/ oder Dekorationselementen mit dem Befestigungsmittel anhand von Linien zum Markieren der Neigung der Stängel (4) erfolgt, die auf dem Zuschnitt des inneren Kerns (22) aufgezeichnet sind.

## Claims

1. Method for producing a floral composition and more particularly a bouquet (1, 21) comprising plants (2) and/or decorative elements, using at least one support, referred to as the external core (5), formed by a lateral wall (7) determining the form and volume of said external core (5) and able to receive at least a top part (8, 23), said method being **characterised in that** it comprises the following steps:
- producing a cutout (6) of the flat projection of the lateral wall (7) of the external core (5);
- placing a fixing means (13) along the external periphery (61) of the cutout (6);
- securing, to the fixing means (13), of a first layer (14) of plants (2) and/or decorative elements that are best arranged in the form of a twist, the heads (3) of the plants (2) and/or of the decorative elements preferably being maintained at the same distance L from the external periphery (61) of the cutout (6);
- cutting out the base of the stems (4) of the plants (2) and/or decorative elements by means of a template (16) placed on the assembly consisting of cutout (6) and plants (2) and/or decorative elements;
- erecting and assembling the assembly consisting of cutout (6) and plants (2) and/or decorative elements so as to form the external envelope of the bouquet (1, 21) ;
- securing the top part (8, 23) at least inside the lateral wall (7) and at the top of the external core (5);
- decorating said top part (8, 23) in any suitable way in order to form the core (9, 24) of the bouquet (1, 21).

2. Method according to claim 1, **characterised in that** it comprises, prior to the step of cutting the stems (4), a step of producing a template (16) corresponding to the cutout of the flat projection of the external form of the bouquet (1) that it is wished to obtain in the end.

3. Method according to either one of claims 1 or 2, **characterised in that**, after the step of securing the first layer (14) of plants (2) and/or decorative elements to the fixing means (13), it comprises successively a step of placing a fixing means (13) along the external periphery of first layer (14) and a step of securing, to the fixing means (13), a second layer (15) of plants (2) and/or decorative elements that are best disposed in the form of a twist.

4. Method according to claim 3, **characterised in that**, after the step of securing the second layer (15) of plants (2) and/or decorative elements, it comprises one or more similar steps of securing another layer of plants (2) and/or decoration elements to the last layer secured on the cutout (6).

5. Method according to any one of claims 1 to 4, **characterised in that**, after the step of erection and assembly of the assembly consisting of cutout (6) and plants (2) and/or decorative elements, it comprises a step of tying the stems (4) towards the base of said external core (5) at their point of convergence (10) with string (17) or the like.

6. Method according to any one of claims 1 to 5, **characterised in that** the step of securing a first layer (14) of plants (2) and/or of decorative elements to the fixing means (13) is performed by means of lines (11) for locating the inclination of the stems (4) traced on the cutout (6).

7. Method according to any one of claims 1 to 6, **characterised in that**, before the step of securing the top part (8, 23) at least inside the lateral wall (7) and at the top of the external core (5), it comprises the following steps:
- producing a cutout of the flat projection of an internal core (22);
- placing a fixing means along the external periphery of said cutout;
- securing to the cutout, by virtue of the fixing means, a first layer of plants (2) and/or decorative elements that are best disposed in the form of a twist, the heads (3) of the plants (2) and/or decorative elements being preferably maintained at the same distance from the external periphery of the cutout;
- erection and assembly of the assembly consisting of cutout and plants (2) and/or decorative elements so as to form the internal core (22) and to have said first layer inside said internal core (22).

8. Method according to claim 7, **characterised in that**, after the step of securing the first layer of plants (2) and/or decorative elements to the fixing means, it comprises successively a step of placing a fixing means along the external periphery of the first layer and step of securing, to the fixing means, a second layer of plants (2) and/or decorative elements that are best disposed in the form of a twist.

9. Method according to claim 8, **characterised in that**, after the step of securing the second layer of plants (2) and/or decorative elements, it comprises one or more similar steps of securing another layer of plants (2) and/or decorative elements to the last layer secured to the cutout of the internal core (22).

10. Method to any one of claims 7 to 9, **characterised in that** the step of securing a first layer of plants (2) and/or decorative elements to the fixing means is performed by means of lines for locating the inclination of the stems (4) traced on the cutout of the internal core (22).
